**Europäisches Patentamt**

**European Patent Office**

**Office européen des brevets**

(11) Veröffentlichungsnummer: **0 264 517**
A1

## (12) EUROPÄISCHE PATENTANMELDUNG

(21) Anmeldenummer: 86890291.7

(22) Anmeldetag: 24.10.86

(51) Int. Cl.⁴: **B23D 43/02**

(43) Veröffentlichungstag der Anmeldung:
27.04.88 Patentblatt 88/17

(84) Benannte Vertragsstaaten:
**AT DE FR GB IT**

(71) Anmelder: **GFM Gesellschaft für Fertigungstechnik und Maschinenbau Gesellschaft m.b.H.
Ennserstrasse 14
A-4403 Steyr(AT)**

(72) Erfinder: **Blaimschein, Gottfried, Dipl.-Ing.
Arnhalmweg 33
A-4407 Steyr(AT)**

(74) Vertreter: **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)**

(54) **Räumwerkzeug für eine Räummaschine.**

(57) Ein Räumwerkzeug (1) für eine Räummaschine besteht aus einem Grundkörper (2), der mit hintereinandergereihten, zu einem Schneidsatz zusammengestellten Schneiden (3) bestückt ist.

Um anschließend an das Rundräumen sofort das Rundräumen vervollständigende Arbeitsschritte ausführen zu können, ist ein dem Schneidsatz in Vorschubrichtung nachgeordnetes Zusatzwerkzeug (4) am Grundkörper (2) angesetzt.

FIG.1

EP 0 264 517 A1

## Räumwerkzeug für eine Räummaschine

Die Erfindung bezieht sich auf ein Räumwerkzeug für eine Räummaschine, mit einem Grundkörper, der hintereinandergereihte, zu einem Schneidsatz zusammengestellte Schneiden aufnimmt.

Rundräumen wird bereits als spanendes Fertigungsverfahren zum Erzeugen von rotationssymmetrischen Querschnitten in der Massenproduktion, vor allem zur Bearbeitung von Kurbel-und Nockenwellen eingesetzt, da dieses Rundräumen bei kurzen Bearbeitungszeiten zu hohen Bearbeitungsgenauigkeiten führt. Die Bearbeitung erfolgt durch eine sich aus einer Rotation und einer Translation zusammensetzenden Schnittbewegung, wobei die Rotation durch eine Drehung des Werkstückes oder des Räumwerkzeuges und die Translation durch einen Längshub des Räumwerkzeuges zustandekommen. Das Räumwerkzeug besteht aus einem Grundkörper, in dem zu einem ganzen Schneidsatz zu sammengestellte Schneiden festgespannt sind und nacheinander zur Vor-und Fertigbearbeitung dienen. Während eines Hubes kommt jede Schneide einmal zum Einsatz und entsprechend dem gewählten Schneidsatz entsteht das gewünschte Profil. Durch die Kinematik des Rundräumens weicht allerdings der bearbeitete kreisförmige Querschnitt vom exakten Kreisquerschnitt ab, und außerdem kann bisher der zur Druchführung des Rundräumverfahrens erforderliche Bau-und Konstruktionsaufwand nicht auch zur Durchführung anderer Bearbeitungsschritte, die beispielsweise an das Rundräumen folgen, genutzt werden.

Der Erfindung liegt daher die Aufgabe zugrunde, diese Mängel zu beseitigen und ein Räumwerkzeug der eingangs geschilderten Art zu - schaffen, das nicht nur ein einwandfreies Rundräumen erlaubt, sondern darüber hinaus auch eine Beseitigung des rundräumbedingten Rundheitsfehlers oder die Durchführung weiterer, das Rundräumen vervollständigender Arbeitsschritte ermöglicht.

Die Erfindung löst diese Aufgabe dadurch, daß ein dem Schneidsatz in Vorschubrichtung nachgeordnetes Zusatzwerkzeug am Grundkörper angesetzt ist. Das Zusatzwerkzeug kommt nach Beendigung des für das Rundräumen erforderlichen Vorschubes zur Wirkung, so daß sich die Arbeitsbewegung dieses Werkzeuges weitgehend auf eine reine Rotation ohne die Überlagerung einer Translation beschränkt. Anschließend an das Rundräumen lassen sich daher bei gleicher Aufspannung und gleichbleibender Ausrüstung und mit ein und demselben Werkzeug unterschiedliche Arbeitsschritte ausüben, die eine Relativdrehung zwischen Werkstück und Werkzeug voraussetzen.

Ist erfindungsgemäß das Zusatzwerkzeug im Stirnbereich einer den Schneidsatz überragenden Grundkörper stufe od. dgl. angeordnet, läßt sich das Zusatzwerkzeug im Gegensatz zu dem tangential dem Bearbeitungsquerschnitt entlanggeführten Räumwerkzeug auf einfache Weise direkt auf die Werkstückachse ausrichten. Abgesehen davon wird durch eine Grundkörperstufe ausreichend Platz für die Anordnung und Lagerung des Zusatzwerkzeuges geboten, was den Einsatz verschiedenster Werkzeugarten als Zusatzwerkzeug erlaubt.

Ist als Zusatzwerkzeug ein Drehwerkzeug, beispielsweise wenigstens ein Schlichtplättchen, vorgesehen, kann sofort anschließend an das Rundräumen der entstandene Rundheitsfehler beseitigt und eine Oberfläche engster Toleranzen durch einen Drehvorgang gefertigt werden.

Um die durch die Herstellung von Freistellungen od. dgl. Übergängen hervorgerufene Schwächung der Werkstückfestigkeit zumindest teilweise wieder aufzuheben, werden solche Querschnitte nach der spanenden Bearbeitung durch Druckwerkzeuge verfestigt. Ist erfindungsgemäß daher als Zusatzwerkzeug ein Druckwerkzeug, beispielsweise eine Druckrolle, vorgesehen, wird es möglich, eine solche Druckbearbeitung sofort dem Rundräumen anzuschließen.

Gemäß einer vorteilhaften Ausgestaltung der Erfindung ist im Bereich zwischen Schneidsatz und Zusatzwerkzeug am Grundkörper eine Stützleiste, -rolle od. dgl. angeordnet, so daß auf einfache Weise für das Werkstück eine zusätzliche Abstützung während der Bearbeitung mit dem Zusatzwerkzeug entsteht.

Besonders günstige Arbeitsbedingungen ergeben sich, wenn das Räumwerkzeug gruppenweise, vorzugsweise paarweise mit einem gegengleich gerichteten zweiten Werkzeug eingesetzt wird, da durch dieses Zusammenwirken zweier oder mehrer Werkzeuge eine Kompensierung der auftretenden Schnittkräfte und Belastungen und auch eine Verkürzung der Bearbeitungszeiten erreicht werden kann.

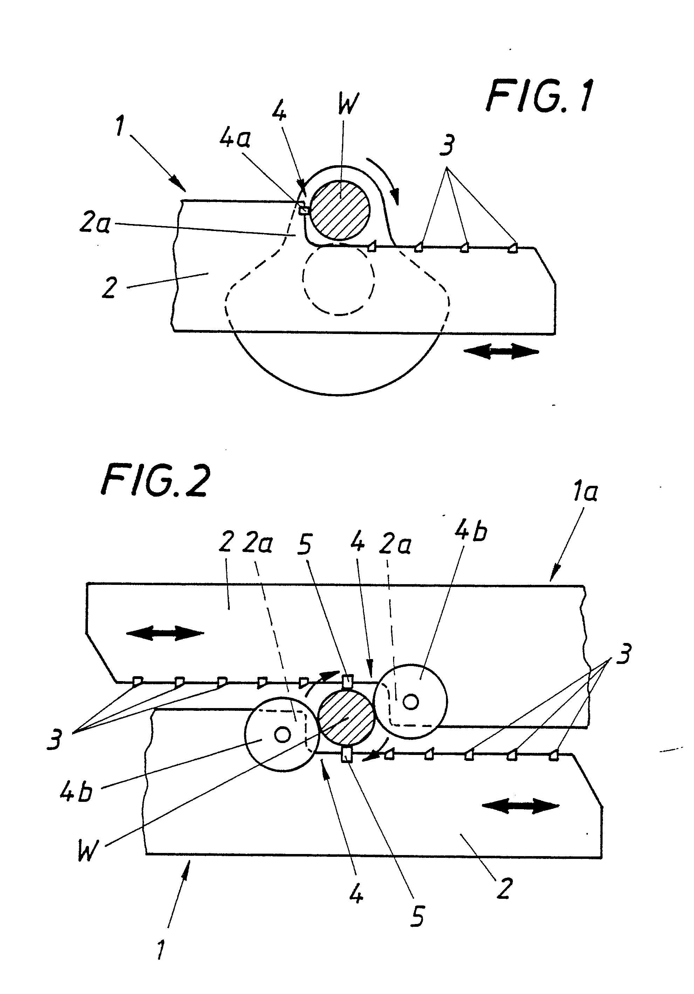

In der Zeichnung ist der Erfindungsgegenstand rein schematisch veranschaulicht, und zwar zeigen Fig. 1 und Fig. 2 zwei Ausführungsbeispiele eines erfindungsgemäßen Räumwerkzeuges in Seitenansicht.

Ein Räumwerkzeug 1 für eine nicht weiter dargestellte Räummaschine besteht aus einem Grundkörper 2, der mit hintereinandergereihten, zu einem Schneidsatz zusammengestellten Schneiden 3 bestückt ist. Um anschließend an das Rundräumen mit ein und demselben Werkzeug das Rundräumen vervollständigende Arbeitsschritte vornehmen zu können, ist am Grundkörper 2 ein den Schneiden 3 nachgeordnetes Zusatzwerkzeug 4 vorgesehen. Dieses Zusatzwerkzeug 4 ist im Stirnbereich einer die Schneiden 3 überragenden Grundkörperstufe 2a gelagert und läßt sich dadurch einfach auf die Achse des zu bearbeitenden Werkstückes W ausrichten.

Wie in Fig. 1 angedeutet, kann als Zusatzwerkzeug 4 ein Schlichtplättchen 4a Verwendung finden, so daß das Werkstück W nach dem Rundräumen durch das Schlichtplättchen 4a einer Drehbearbeitung unterzogen wird, wodurch einerseits der durch das Rundräumen entstandene Rundheitsfehler des Bearbeitungsquerschnittes beseitigt und anderseits eine besondere Oberflächenqualität erreicht wird.

Gemäß dem Ausführungsbeispiel nach Fig. 2 dient als Zusatzwerkzeug 4 eine Druckrolle 4b, so daß eine durch das Rundräumen hergestellte Freistellung od. dgl. durch eine Druckbehandlung verfestigt werden kann. Hier gibt es außerdem eine am Grundkörper 2 zwischen den Schneiden 3 und dem Zusatzwerkzeug 4 vorgesehene Abstützleiste 5 für eine zusätzliche Abstützung des Werkstückes W bei der Bearbeitung durch das Zusatzwerkzeug 4. Auch sind in diesem Ausführungsbeispiel zwei gegengleich gerichtete, gleichzeitig wirkende Räumwerkzeuge 1, 1a angedeutet, durch welchen paarweisen Einsatz der Räumwerkzeuge sich günstige Schnitt-und Abstützverhältnisse für die Werkstückbearbeitung erreichen lassen.

Beim Rundräumen wird das Räumwerkzeug 1 mit seinen Schneiden 3 tangential dem Bearbeitungsquerschnitt des Werkstückes W entlanggeführt, wobei gleichzeitig Werkstück W und Werkzeug 1 relativ zueinander drehen. Ist der Räumvorgang beendet, kann mit dem erfindungsgemäßen Werkzeug 1 sofort das Zusatzwerkzeug 4 zum Einsatz gebracht werden, das lediglich an das Werkstück W anzustellen ist und bei der auf die Relativdrehung beschränkten Arbeitsbewegung zur Wirkung kommt. Diese Relativdrehung kann durch eine Drehung des Werkstückes W aber auch durch eine Umlaufbewegung der Werkzeuge 1 erreicht werden, und entsprechend dem jeweiligen Einsatz der Zusatzwerkzeuge 4 sind auf einfache Weise mit einem Rundräumen verschiedene zusätzliche Arbeitsschritte zu kombinieren.

## Ansprüche

1. Räumwerkzeug für eine Räummaschine, mit einem Grundkörper (2), der hintereinandergereihte, zu einem Schneidsatz zusammengestellte Schneiden (3) aufnimmt, dadurch gekennzeichnet, daß ein dem Schneidsatz in Vorschubrichtung nachgeordnetes Zusatzwerkzeug (4) am Grundkörper (2) angesetzt ist.

2. Räumwerkzeug nach Anspruch 1, dadurch gekennzeichnet, daß das Zusatzwerkzeug (4) im Stirnbereich einer den Schneidsatz überragenden Grundkörperstufe (2a) od. dgl. angeordnet ist.

3. Räumwerkzeug nach Anspruch 1 oder 2, dadurch gekennzeichnet, daß als Zusatzwerkzeug ein Drehwerkzeug, beispielsweise wenigstens ein Schlichtplättchen (4a), vorgesehen ist.

4. Räumwerkzeug nach Anspruch 1 oder 2, dadurch gekennzeichnet, daß als Zusatzwerkzeug ein Druckwerkzeug, beispielsweise eine Druckrolle (4b), vorgesehen ist.

5. Räumwerkzeug nach einem der Ansprüche 1 bis 4, dadurch gekennzeichnet, daß im Bereich zwischen Schneidsatz und Zusatzwerkzeug (4b) am Grundkörper (2) eine Stützleiste, -rolle (5) od. dgl. angeordnet ist.

6. Räumwerkzeug nach einem der Ansprüche 1 bis 5, gekennzeichnet durch seinen gruppenweisen Einsatz, vorzugsweise paarweisen Einsatz mit einem gegengleich gerichteten zweiten Werkzeug (1a).

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DD-A- 201 400 (KOPPMANN)<br>* Zusammenfassung; Ansprüche 1,2; Figur 1 * | 1,4 | B 23 D 43/02 |
| X | US-A-2 585 166 (PHANEUF)<br>* Spalte 1, Zeile 43 - Spalte 2, Zeile 18; Figuren 1-3 * | 1,4 | |
| X | DD-A- 34 525 (HOPPE)<br>* Spalte 2, Zeilen 6-25; Figuren 1,2 * | 1 | |
| A | US-A-2 620 709 (WILDHABER et al.)<br>* Anspruch 11; Figuren 1,6,7 * | 1 | |
| A | DE-A-2 253 936 (TOYO KOGYO CO.)<br>* Anspruch 3; Figuren 2,3 * | 1,4 | RECHERCHIERTE SACHGEBIETE (Int. Cl.4) |
| A | US-A-2 330 968 (GROENE et al.)<br>* Seiten 2,3; Figuren 5,13 * | 2 | B 23 B 5/18<br>B 23 D 43/00<br>B 23 F 19/00<br>B 23 F 21/00 |
| A | US-A-4 080 699 (ANDERSON)<br>* Spalte 5, Zeilen 31-40; Figur 7 * | 6 | |

Der vorliegende Recherchenbericht wurde für alle Patentansprüche erstellt.

| Recherchenort<br>BERLIN | Abschlußdatum der Recherche<br>26-05-1987 | Prüfer<br>MARTIN A E W |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82